(19) Europäisches Patentamt / European Patent Office / Office européen des brevets

(11) **EP 4 717 796 A2**

(12) **EUROPEAN PATENT APPLICATION**

(43) Date of publication:
**01.04.2026 Bulletin 2026/14**

(21) Application number: **25197959.7**

(22) Date of filing: **25.08.2025**

(51) International Patent Classification (IPC):
*C25B 1/04* (2021.01)    *C25B 15/023* (2021.01)

(52) Cooperative Patent Classification (CPC):
**C25B 1/04; C25B 9/70; C25B 15/023; C25B 15/027**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.09.2024 IN 202411072807**

(71) Applicant: **Honeywell International Inc.**
**Charlotte, NC 28202 (US)**

(72) Inventors:
• **DEVARAJAN, Ashalatha**
**Charlotte, 28202 (US)**
• **RAO, Deepa Gopalakrishna**
**Charlotte, 28202 (US)**
• **GOEL, Jyoti**
**Charlotte, 28202 (US)**
• **KAPOOR, Manshu**
**Charlotte, 28202 (US)**
• **M, Shylaja**
**Charlotte, 28202 (US)**
• **ARUNACHALAM, Soundari**
**Charlotte, 28202 (US)**
• **ADKAR, Swapnil Vijay**
**Charlotte, 28202 (US)**

(74) Representative: **Haseltine Lake Kempner LLP**
**Cheapside House**
**138 Cheapside**
**London EC2V 6BJ (GB)**

(54) **METHODS, APPARATUSES, AND COMPUTER PROGRAM PRODUCTS FOR DIAGNOSING A DEGRADATION CONDITION IN AN ELECTROLYZER**

(57)    A computer-implemented method for diagnosing a degradation condition in an electrolyzer may comprise receiving data corresponding to a plurality of operational parameters of an electrolyzer stack comprising at least an input voltage and an operational current; generating runtime current-voltage (I-V) curves based on the input voltage and the operational current; comparing the generated I-V curves to expected I-V curves; identifying a first set of degradation conditions based on deviations between the generated I-V curves and the expected I-V curves; identifying data clusters of operational parameter data corresponding to times the electrolyzer operated with operational parameters in an undesirable range; identifying a second set of degradation conditions based on the identified data clusters; and comparing the first set of degradation conditions and the second set of degradation conditions to identify if any degradation conditions are present in both the first set of degradation conditions and the second set of degradation conditions.

FIG. 1

**Description**

TECHNOLOGICAL FIELD

The present disclosure generally relates to electrolyzers, and more particularly to diagnosing a degradation condition in an electrolyzer.

BACKGROUND

Hydrogen (H2) is considered a clean fuel that, when used in a fuel cell, produces only water vapor as a byproduct, making it a promising alternative to fossil fuels for transportation and electricity generation. Generating hydrogen via electrolysis using renewable energy sources like wind and solar is often termed Green Hydrogen. The splitting of water via electrolysis to produce hydrogen is done by an electrolyzer.

Commercial electrolyzer modules are a combination of multiple electrolyzer stacks in series/parallel arrays. Each stack contains materials (electrode, membrane/separator, bipolar plates, current collector, etc.) that are subject to degradation over the time. Being an electrochemical system, it is prone to degradation owing to its usage, varying electricity, frequent shutdown and startup, temperature, and pressure variations as well as load variations.

Electrolyzer degradation leads to low module efficiency and hence a high cost of hydrogen. Moreover, if degradation remains unsupervised it can also lead to high maintenance/operational expenditures. Degradation can cause a catastrophic failure leading to plant down time and extra capital expenditures due to premature equipment replacement. As these electrolyzer systems are very complex, it is very difficult to monitor or detect degradation with conventional measurement systems.

Electrolyzer degradation may be a particular issue with Green Hydrogen production since the electricity supplied by such renewable energy sources may not have the same consistency as electricity supplied by conventional energy sources.

Applicant has discovered many technological inefficiencies related to the diagnosing a degradation condition in an electrolyzer.

BRIEF SUMMARY

Various embodiments described herein relate to computer implemented methods, apparatuses, and computer program products for diagnosing a degradation condition in an electrolyzer.

In accordance with a first aspect of the disclosure, a computer-implemented method for diagnosing a degradation condition in an electrolyzer is provided. In at least one example embodiment, an example method comprises receiving data corresponding to a plurality of operational parameters of an electrolyzer stack, the plurality of operational parameters comprising at least an input voltage and an operational current; generating one or more runtime current-voltage (I-V) curves based on the input voltage and the operational current; comparing the one or more generated I-V curves to one or more expected I-V curves; identifying a first set of one or more degradation conditions based on one or more deviations between the one or more generated I-V curves and the one or more expected I-V curves; identifying one or more data clusters of operational parameter data corresponding to one or more times the electrolyzer operated with one or more operational parameters in an undesirable range; identifying a second set of one or more degradation conditions based on the one or more identified data clusters; comparing the first set of one or more degradation conditions and the second set of one or more degradation conditions to identify if one or more degradation conditions are present in both the first set of one or more degradation conditions and the second set of one or more degradation conditions; and if one or more degradation conditions are present in both the first set of one or more degradation conditions and the second set of one or more degradation conditions, reporting the one or more degradation conditions that are present in both the first set of one or more degradation conditions and the second set of one or more degradation conditions.

In some embodiments, the plurality of operational parameters comprises process parameters and electrical parameters.

In some embodiments, the process parameters comprise one or more of a feed rate of an electrolyte, a temperature of the electrolyte, a molarity of the electrolyte, a purity of the electrolyte, a pressure of the electrolyte, and an amount of hydrogen produced; and the electrical parameters comprise the input voltage and the operational current;

In some embodiments, the one or more expected I-V curves are received from a manufacturer of the electrolyzer.

In some embodiments, the one or more degradation conditions comprise electrode corrosion, electrode fouling, membrane/separator failure, bipolar plate corrosion, and/or current collector dissolution.

In some embodiments, the method further comprises comparing the input voltage to a predetermined baseline voltage. Comparing the one or more generated I-V curves to one or more expected I-V curves, identifying a first set of one or more degradation conditions based on one or more deviations between the one or more generated I-V curves and the one or more expected I-V curves, and identifying one or more data clusters of operational parameter data corresponding to one or more times the electrolyzer operated with one or more operational parameters in an undesirable range are performed when the input voltage exceeds the predetermined baseline voltage.

In some embodiments, the method further comprises, if one or more degradation conditions are identified based on one or more deviations between the one or more generated I-V curves and the one or more expected I-V curves, providing feedback to a control mechanism of the electrolyzer to reduce the input voltage.

In accordance with another aspect of the disclosure, an apparatus for diagnosing a degradation condition in an electrolyzer is provided. The apparatus comprises at least one processor and at least one non-transitory memory comprising program code. The at least one non-transitory memory and the program code are configured to, with the at least one processor, cause the apparatus to receive data corresponding to a plurality of operational parameters of an electrolyzer stack, the plurality of operational parameters comprising at least an input voltage and an operational current; generate one or more runtime current-voltage (I-V) curves based on the input voltage and the operational current; compare the one or more generated I-V curves to one or more expected I-V curves; identify a first set of one or more degradation conditions based on one or more deviations between the one or more generated I-V curves and the one or more expected I-V curves; identify one or more data clusters of operational parameter data corresponding to one or more times the electrolyzer operated with one or more operational parameters in an undesirable range; identify a second set of one or more degradation conditions based on the one or more identified data clusters; compare the first set of one or more degradation conditions and the second set of one or more degradation conditions to identify if one or more degradation conditions are present in both the first set of one or more degradation conditions and the second set of one or more degradation conditions; and if one or more degradation conditions are present in both the first set of one or more degradation conditions and the second set of one or more degradation conditions, report the one or more degradation conditions that are present in both the first set of one or more degradation conditions and the second set of one or more degradation conditions.

In accordance with yet another aspect of the disclosure, an example computer program product for providing a dynamic external user interface to a process simulation service is provided. The example computer program product includes at least one non-transitory computer-readable storage medium having computer-readable program code portions stored therein, the computer-readable program code portions comprising an executable portion configured to at least receive data corresponding to a plurality of operational parameters of an electrolyzer stack, the plurality of operational parameters comprising at least an input voltage and an operational current; generate one or more runtime current-voltage (I-V) curves based on the input voltage and the operational current; compare the one or more generated I-V curves to one or more expected I-V curves; identify a first set of one or more degradation conditions based on one or more deviations between the one or more generated I-V curves and the one or more expected I-V curves; identify one or more data clusters of operational parameter data corresponding to one or more times the electrolyzer operated with one or more operational parameters in an undesirable range; identify a second set of one or more degradation conditions based on the one or more identified data clusters; compare the first set of one or more degradation conditions and the second set of one or more degradation conditions to identify if one or more degradation conditions are present in both the first set of one or more degradation conditions and the second set of one or more degradation conditions; and if one or more degradation conditions are present in both the first set of one or more degradation conditions and the second set of one or more degradation conditions, report the one or more degradation conditions that are present in both the first set of one or more degradation conditions and the second set of one or more degradation conditions.

The foregoing illustrative summary, as well as other exemplary objectives and/or advantages of the disclosure, and the manner in which the same are accomplished, are further explained in the following detailed description and its accompanying drawings.

BRIEF DESCRIPTION OF THE SEVERAL VIEWS OF THE DRAWINGS

Having thus described the embodiments of the disclosure in general terms, reference now will be made to the accompanying drawings, which are not necessarily drawn to scale, and wherein:

FIG. 1 illustrates a block diagram of a system that may be specially configured within which embodiments of the present disclosure may operate;
FIG. 2 illustrates a block diagram of an example electrolyzer system, in accordance with an example embodiment of the present disclosure;
FIG. 3 illustrates a block diagram of an example control and monitoring system, in accordance with an example embodiment of the present disclosure;
FIG. 4 illustrates a process block diagram of an example process for diagnosing a degradation condition in an electrolyzer, in accordance with example embodiments of the present disclosure;

FIG. 5 illustrates further details of the process block diagram of FIG. 4, in accordance with an example embodiment of the present disclosure; and

FIGS. 6A-C illustrate results of an impedance analysis, in accordance with an example embodiment of the present disclosure.

DETAILED DESCRIPTION

The term "or" is used herein in both the alternative and conjunctive sense, unless otherwise indicated. Terms such as "computing," "determining," "generating," and/or similar words are used herein interchangeably to refer to the creation, modification, or identification of data. Further, "based on," "based on in part on," "based at least on," "based upon," and/or similar words are used herein interchangeably in an open-ended manner such that they do not indicate being based only on or based solely on the referenced element or elements unless so indicated. Like numbers refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

Electrolyzers typically comprise electrodes (anodes and cathodes), a membrane, bipolar plates, flow frames, current collectors, end plates, and an electrolyte. Electrodes are typically precious/non-precious metals (catalysts) deposited onto a substrate. A substrate refers to a template (electrically conducting) that is typically porous and gives specific surface area for the catalyst. Typical examples of a catalyst include platinum, iridium, nickel, iron, ruthenium, etc. (mixed metal oxides of these materials also exist) and typical examples of substrates include carbon paper, carbon felt, metallic plat, metallic foam, etc. Membranes are typically polymeric materials with a typical functionality/pore size distribution. These are non-conductors and their prime objective is to separate the two electrodes and accomplish a successful charge-balance during electrolyzer operation. Each anode-membrane-cathode combination is typically called a cell. However, in a commercial stack, bipolar plates are used to connect such cells in series. A typical configuration involves anode-membrane-cathode-bipolar plate-anode-membrane... and so on. Typical material of construction of bipolar plates are either carbon or metal plates. The purpose of a flow frame is to distribute the electrolyte in an electrolyzer. Typical material of construction of a flow frame is plastic (e.g., polypropylene, Teflon, HDPE, etc.) Current collectors are metallic plates (typically copper/titanium/stainless steel) that are placed adjacent to the first and the last electrode. End plates are thick metallic plates that houses the entire stack assembly. Electrolyte refers to a working fluid that typically is prepared using de-ionized water. This fluid can also have salts like potassium hydroxide in it (specifically for alkaline and anion exchange membrane electrolyzers).

Typical reasons for degradation in an electrolyzer include, but are not limited to, abuse of usage (using electrolyzer at very high-power rating or very low power rating), inefficient control system, inefficient safety systems, erosion/corrosion of materials over lifetime, continuous electrical fatigue, sudden high intensity loads, sudden high operational temperature, etc. Operation of an electrolyzer in a state of degradation can hamper its rated life.

Scientifically, material degradation is a microscopic and complex phenomenon. In a commercial electrolyzer module/stack, the types of material degradation can include but are not limited to: electrode corrosion/fouling which may lead to inefficient electrochemical reaction kinetics; membrane/separator failure which may lead to a catastrophic fire hazard; bipolar plate corrosion which may lead to shunt current loses; and current collector dissolution which may lead to electrolyte contamination and hence deposition of contaminants on electrode/membrane leading to its inactivity. Specific examples of types of degradation in the different components of an electrolyzer include: in the electrolyte-salt precipitation, acidity enhancement, and impurities; in the electrode-catalyst dissolution, catalyst poisoning, facet/oxidation state change, and passivation; in the membrane-mechanical degradation, chemical thinning, metal poisoning, and thermal melt/expansion; and in the bipolar plate-embrittlement, corrosion, and irreversible insulation.

Degradation or any kind of performance derating in the core electrolyzer stack manifests as an increase in internal resistance which impacts the voltage versus current density relationship of the electrolyzer. The internal resistance can go up due to short term effects related to unit operation in that snapshot of time or result in longer term effects such as corrosion of current collectors, membrane resistance increase, electrode degradation etc.

All the above-mentioned types of degradation will result in electrochemical reaction overpotential and hence will result in the reduction of electrolyzer stack/module efficiency. First principal methods of diagnosing this degradation at a cell level is very complex (x-ray tomography, destructive analysis using scanning electron microscope, X-ray diffraction, etc.). Further, implementing those methods on stack or module level are fairly impractical. Therefore, with these concerns in picture, it is desirable to have a diagnostic evaluation framework that can utilize the data of macroscopic measurable parameters (such as current, voltage, temperature, etc.) and correlate that with degradation.

Generally, degradation can be of two types. Degradation can be simple degradation that is reversible. For example, a line was plugged causing a pump to have to work harder. Degradation can be longer term, but reversible. For example, the membranes became fouled because of the wrong kind of reactions occurring because the electrolyzer was not operated in the right manner. Degradation may also be longer term and not reversible. Generally, degradation does not stop once it has set it. The degradation has a trajectory which is a function of, for example, how the electrode, membranes, etc. have been configured in the electrolyzer.

Various embodiments of the present disclosure address technical challenges related to diagnosing a degradation condition in an electrolyzer. Specifically, embodiments of the present disclosure provide a unique way of diagnosing the degradation of a commercial electrolyzer module by monitoring process and electrical parameters that are macroscopic and easily measurable. Various embodiments of the present disclosure may ensure that the electrolyzer module produces the demanded hydrogen at a desired rate throughout over its entire rated lifetime. Various embodiments of the present disclosure may also ensure that the electrolyzer efficiency (faradaic, voltage, and energy efficiencies) is maintained (e.g., does not reduce by a threshold value) while having least operational/maintenance expenditures. Various embodiments of the present disclosure can be used with various kinds of electrolyzer technology (e.g., alkaline/proton-exchange/anion-exchange). The macroscopic parameters that may be utilized in various embodiments of the present disclosure include: voltage (V), current (I), hydrogen generation rate (H), hydrogen purity (p), electrolyte (e.g., lye or water) inlet temperature (T); electrolyte circulation rate (Q), electrolyte molarity or conductivity (M), and outlet product pressure (P). Other macroscopic parameters that may be utilized include electrolyte outlet temperature and electrolyte conductivity at the outlet of the stack.

Various embodiments of the present disclosure enable segregation of these into reversible or irreversible effects using a detailed electrolyzer model with relevant coefficients matched to reflect current operational state of the whole stack helps to narrow down to a probable root cause which can further be enhanced by correlating the process parameter data such that the controllers operating the plan can update with the correct set points for the electrolyzer. All of this can be done without use of additional sensors in the system.

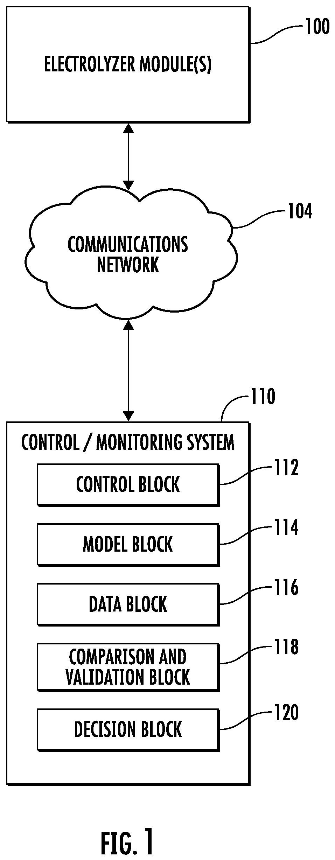

FIG. 1 illustrates a block diagram of a system in which embodiments of the present disclosure may operate. Specifically, FIG. 1 illustrates an electrolyzer module (or multiple modules) 100 (each of which typically comprises a plurality of individual electrolyzer stacks) in communication with a control and monitoring system 110 capable of diagnosing one or more degradation conditions within the electrolyzer module 100. In some embodiments, the electrolyzer module 100 communicates with the control and monitoring system 110 over one or more communication network(s), for example a communications network 104. In some embodiments, the control and monitoring system 110 is in communication with a plurality of electrolyzer modules, each identically or similarly configured to the electrolyzer module 100. As depicted in FIG. 1, in some embodiments, the control and monitoring system 110 includes the following process blocks, as described further below: a control block 112, a model block 114, a data block 116, a comparison and validation block 118, and a decision block 120.

It should be appreciated that the communications network 104 in some embodiments is embodied in any of a myriad of network configurations. In some embodiments, the communications network 104 embodies a public network (e.g., the Internet). In some embodiments, the communications network 104 embodies a private network (e.g., an internal localized, or closed-off network between particular devices). In some other embodiments, the communications network 104 embodies a hybrid network (e.g., a network enabling internal communications between particular connected devices and external communications with other devices). The communications network 104 in some embodiments includes one or more base station(s), relay(s), router(s), switch(es), cell tower(s), communications cable(s) and/or associated routing station(s), and/or the like. In some embodiments, the communications network 104 includes one or more user-controlled computing device(s) (e.g., a user owned router and/or modem) and/or one or more external utility devices (e.g., Internet service provider communication tower(s) and/or other device(s)).

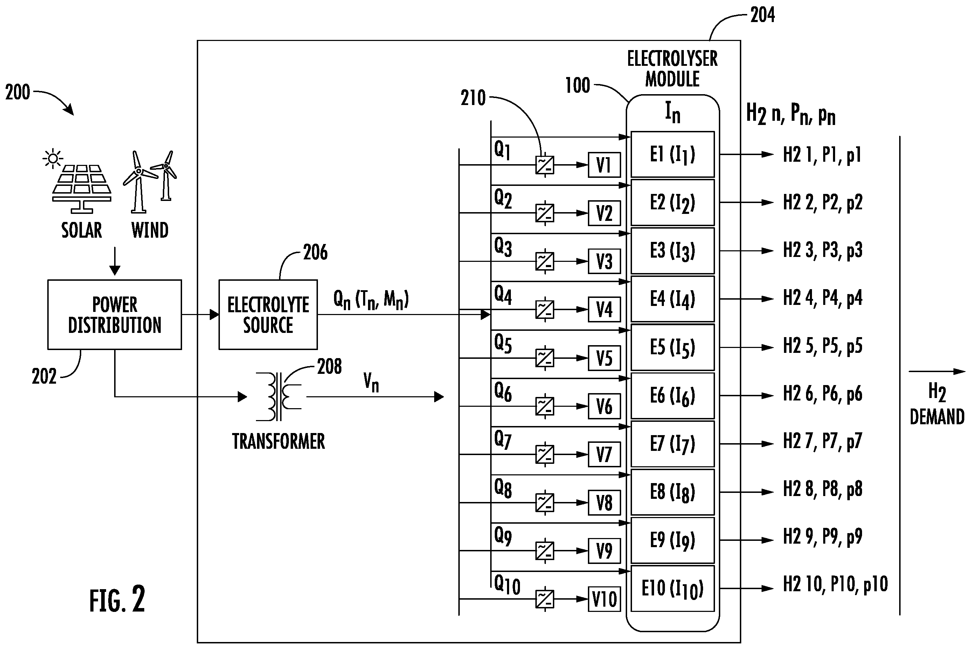

FIG. 2 illustrates a block diagram of an example electrolyzer system 204, in accordance with an example embodiment of the present disclosure. In the illustrated example, electricity to power the electrolyzer system 204 is generated by green energy sources 200 such as solar and wind and distributed by a power distribution system 202. In the process block diagrams described below, the example electrolyzer system 204 is described as an operation block as the system performs the operation of hydrogen generation. The example electrolyzer system 204 comprises an electrolyzer module 100 which comprises a plurality of individual electrolyzer stacks E1-E10 connected in parallel. The example electrolyzer system 204 comprises an electrolyte source 206 which provides a flow of an electrolyte (e.g., potassium hydroxide (KOH)) to each electrolyzer En. The example electrolyzer system 204 comprises one or more step down transformers 208 to reduce the voltage coming in from the power distribution system 202 to a voltage Vn needed for each electrolyzer En.

Each electrolyzer En receives a voltage input Vn from a rectifier 210 and an electrolyte feed input Qn from the electrolyte source 206 at specific temperature Tn and molarity Mn. In response to Vn, each electrolyzer En produces an output current In and a corresponding hydrogen production H2n with purity pn (impurities may typically include oxygen and the electrolyte being entrained with gas bubbles) and outlet pressure Pn. In various embodiments, the parameters discussed here are macroscopic and easily measurable/controlled with a control system. Moreover, of these parameters, input voltage Vn, and output current In are termed electrical parameters whereas electrolyte feed input Qn, temperature Tn, molarity Mn, hydrogen production H2n, purity pn, and outlet pressure Pn are termed process parameters.

Typically, a specific hydrogen H2 demand would require a specific output current In from each electrolyzer stack En. To get this output current In, the respective rectifier 210 of each electrolyzer En will supply desired input voltage Vn. Further, for a typical output current In, estimated values of the electrolyte feed Qn would be evaluated, and these would be transported to each electrolyzer En at desired temperature Tn and molarity Mn. At any point of time, the data from this system / operation block 204 will be continuously monitored by the control block 112 and the data block 116 as described below.

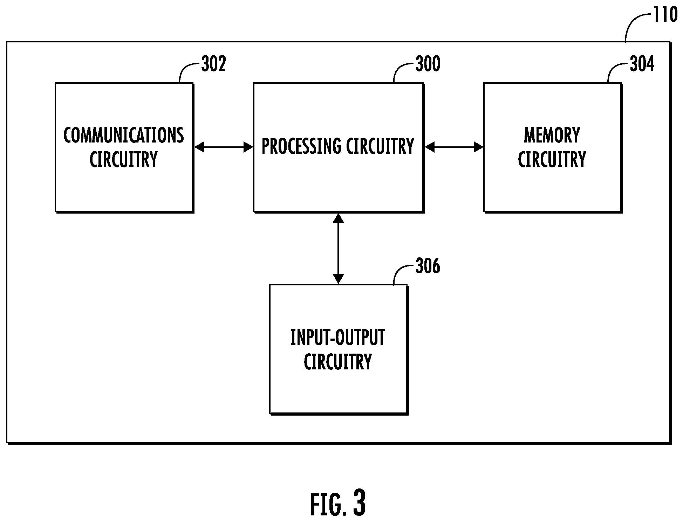

FIG. 3 illustrates a block diagram of an example control and monitoring system 110 in accordance with an example embodiment of the present disclosure. Specifically, FIG. 3 depicts an example computing apparatus specially configured in accordance with at least some example embodiments of the present disclosure. In some embodiments, the control and monitoring system 110 includes a processing circuitry 300, a communications circuitry 302, a memory 304, and an input/output circuitry 306. In some embodiments, the control and monitoring system 110 is configured, using one or more of the sets of circuitry 300-306 to execute and perform the operations described herein.

In general, the terms computing entity, device, system, and/or similar words used herein interchangeably may refer to, for example, one or more computers, computing entities, desktop computers, mobile phones, tablets, phablets, notebooks, laptops, distributed systems, items/devices, terminals, servers or server networks, blades, gateways, switches, processing devices, processing entities, set-top boxes, relays, routers, network access points, base stations, the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein interchangeably. In some embodiments, these functions, operations, and/or processes can be performed on data, content, information, and/or similar terms used herein interchangeably. In this regard, the control and monitoring system 110 embodies a particular, specially configured computing entity transformed to enable the specific operations described herein and provide the specific advantages associated therewith, as described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), network interface(s), storage medium(s), and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively or additionally, in some embodiments, other elements of the control and monitoring system 110 provide or supplement the functionality of another particular set of circuitry. For example, the processing circuitry 300 in some embodiments provides processing functionality to any of the sets of circuitry, the memory circuitry 304 provides storage functionality to any of the sets of circuitry, the communications circuitry 302 provides network interface functionality to any of the sets of circuitry, and/or the like.

In some embodiments, the processing circuitry 300 (and/or co-processor or any other processing circuitry assisting or otherwise associated with the processor) is/are in communication with the memory circuitry 304 via a bus for passing information among components of the control and monitoring system 110. In some embodiments, for example, the memory circuitry 304 is non-transitory and may include, for example, one or more volatile and/or non-volatile memories. In other words, for example, the memory circuitry 304 in some embodiments includes or embodies an electronic storage device (e.g., a computer readable storage medium). In some embodiments, the memory circuitry 304 is configured to store information, data, content, applications, instructions, or the like, for enabling the control and monitoring system 110 to carry out various functions in accordance with example embodiments of the present disclosure.

The processing circuitry 300 may be embodied in a number of different ways. For example, in some example embodiments, the processing circuitry 300 includes one or more processing devices configured to perform independently. Additionally or alternatively, in some embodiments, the processing circuitry 300 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the control and monitoring system 110, and/or one or more remote or "cloud" processor(s) external to the control and monitoring system 110.

In an example embodiment, the processing circuitry 300 is configured to execute instructions stored in the memory circuitry 304 or otherwise accessible to the processor. Alternatively or additionally, the processing circuitry 300 in some embodiments is configured to execute hard-coded functionality. As such, whether configured by hardware or software methods, or by a combination thereof, the processing circuitry 300 represents an entity (e.g., physically embodied in circuitry) capable of performing operations according to an embodiment of the present disclosure while configured accordingly. Alternatively or additionally, as another example in some example embodiments, when the processing circuitry 300 is embodied as an executor of software instructions, the instructions specifically configure the processing circuitry 300 to perform the algorithms embodied in the specific operations described herein when such instructions are executed.

In some embodiments, the control and monitoring system 110 includes communications circuitry 302. The communications circuitry 302 includes any means such as a device or circuitry embodied in either hardware or a combination of hardware and software that is configured to receive and/or transmit data from/to a network and/or any other device, circuitry, or module in communication with the control and monitoring system 110. In this regard, in some embodiments the communications circuitry 302 includes, for example, a network interface for enabling communications with a wired or wireless communications network. Additionally or alternatively in some embodiments, the communications circuitry 302 includes one or more network interface card(s), antenna(s), bus(es), switch(es), router(s), modem(s), and supporting hardware, firmware, and/or software, or any other device suitable for enabling communications via one or more communications network(s). Additionally or alternatively, the communications circuitry 302 includes circuitry for interacting with the antenna(s) and/or other hardware or software to cause transmission of signals via the antenna(s) or to handle receipt of signals received via the antenna(s). In some embodiments, the communications circuitry 302 enables transmission to and/or receipt of data from one or more electrolyzer(s) or accompanying sensor(s), one or more user device(s), one or more asset(s), and/or other external computing device in communication with the control and monitoring system 110.

In some embodiments, the control and monitoring system 110 includes input/output circuitry 306 that provides output to the user and, in some embodiments, to receive an indication of a user input. In some embodiments, the input/output circuitry 306 is in communication with the processing circuitry 300 to provide such functionality. The input/output circuitry 306 may comprise one or more user interface(s) and in some embodiments includes a display that comprises the interface(s) rendered as a web user interface, an application user interface, a user device, a backend system, or the like. In some embodiments, the input/output circuitry 306 also includes a keyboard, a mouse, a joystick, a touch screen, touch areas, soft keys a microphone, a speaker, and/or other input/output mechanisms. In various examples of the present disclosure, the display may include a liquid crystal display (LCD), a light-emitting diode (LED) display, a plasma (PDP) display, a quantum dot (QLED) display, and/or the like. The processing circuitry 300 and/or input/output circuitry 306 may be configured to control one or more functions of one or more user interface elements through computer program instructions (e.g., software and/or firmware) stored on a memory accessible to the processor (e.g., memory circuitry 304, and/or the like). In some embodiments, the input/output circuitry 306 includes or utilizes a user-facing application to provide input/output functionality to a client device and/or other display associated with a user.

Having described example systems and apparatuses in accordance with the present disclosure, example processes for enabling diagnosing a degradation condition in an electrolyzer will now be discussed. It will be appreciated that each of the flowcharts /process block diagrams depicts an example computer-implemented process that is performable by one or more of the apparatuses, systems, devices, and/or computer program products described herein, for example utilizing one or more of the specially configured components thereof.

The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted block(s) in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

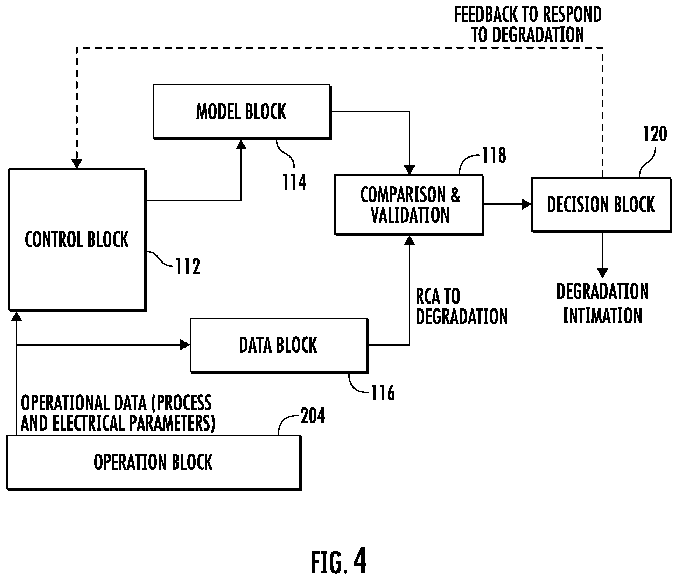

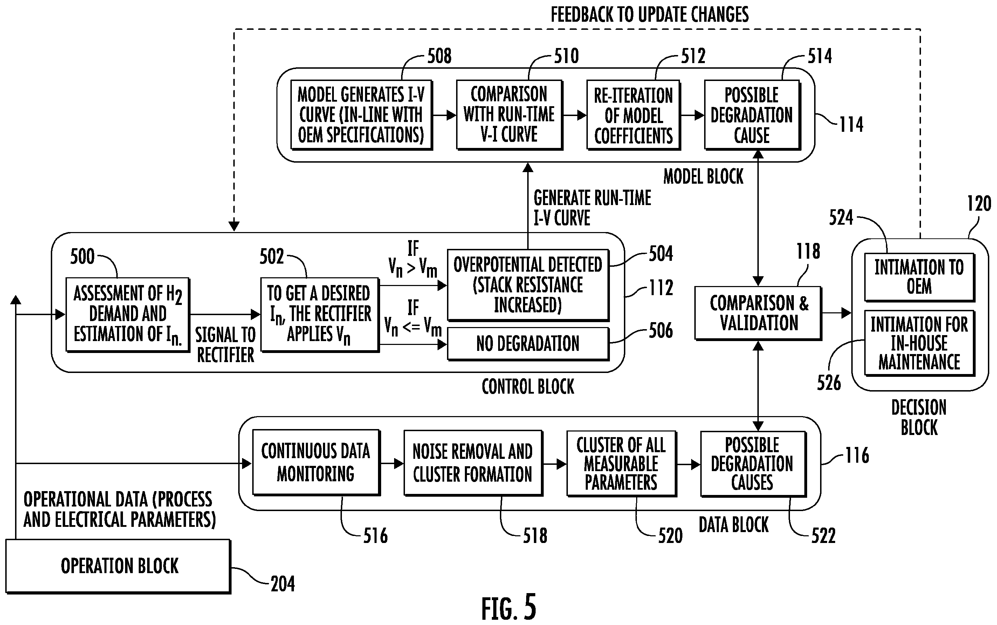

Referring now to FIGS. 4 and 5, a flowchart / process block diagram including example operations of an example process for diagnosing a degradation condition in an electrolyzer is illustrated. Specifically, FIG. 4 illustrates an example process flow at a high level, while FIG. 5 illustrates additional details of the example process flow of FIG. 4.

FIGS. 4 and 5 illustrate an example computer-implemented process flow. In some embodiments, the process flow of FIGS. 4 and 5 is embodied by computer program code stored on a non-transitory computer-readable storage medium of a computer program product configured for execution to perform the process as depicted and described. Alternatively or additionally, in some embodiments, the process flow of FIGS. 4 and 5 is performed by one or more specially configured computing devices, such as the control and monitoring system 110 alone or in communication with one or more other component(s), device(s), system(s), and/or the like. In this regard, in some such embodiments, the control and monitoring system 110 is specially configured by computer-coded instructions (e.g., computer program instructions) stored thereon, for example in the memory circuitry 304 and/or another component depicted and/or described herein and/or otherwise accessible to the control and monitoring system 110, for performing the operations as depicted and described. In some embodiments, the control and monitoring system 110 is in communication with one or more external apparatus(es), system(s), device(s), and/or the like, to perform one or more of the operations as depicted and described. For example, the control and monitoring system 110 in some embodiments is in communication with separate physical component(s) of one or more industrial plants, and/or the like.

As illustrated in FIGS. 4 and 5, operational data (e.g., process and electrical parameters as described above) are provided by an electrolyzer system, represented by operation block 204, to a control block 112 and a data block 116.

In various embodiments, the operation block 204 includes at least the entire electrolyzer module 100 and will generate data corresponding to the process and electrical parameters. In various embodiments, this data is shared with the data block 116 and the control block 112. In various embodiments, the data provided to data block 116 would be processed periodically (e.g., hourly/daily/weekly/monthly). In various embodiments, post processing is performed and clusters of these data are formed. In various embodiments, clusters refer to segregation of data in terms of a special incident; for example how many times did En cross a specific temperature, how many times was En on standby condition, etc. In various embodiments, information received from these clusters would then be utilized to perform a detailed root cause analysis (RCA) to identify possible causes of degradation.

In various embodiments, possible causes of degradation identified by the data block 116 are validated. To do this, data generated by the operation block 204 is also provided to the control block 112. In various embodiments, the data received by the control block 112 is continuously compared with corresponding data provided by the manufacturer of the electrolyzer (termed the original equipment manufacturer or OEM). In various embodiments, this comparison is a first-cut analysis to identify/validate degradation. In various embodiments, to identify a more precise cause of degradation, the control block 112 generates a run-time I-V curve (e.g., monthly/quarterly/yearly). In various embodiments, this run-time I-V curve is compared in the model block 114 with an I-V curve provided by the OEM. In various embodiments, the model block 114 performs a regression analysis to determine what parts of the model have seen a change (for example, whether the coefficients of ohmic losses have changed). In various embodiments, based on the changes observed yet another possible list of degradation causes is identified. In various embodiments, the comparison and validation block 118 compares the degradation causes in this list with the degradation causes in the list obtained from the data block 116. In various embodiments, a validated degradation cause is identified from this comparison. In various embodiments, the decision block 120 provides feedback to the control block 112 to ensure that necessary changes in the process are made so that H2 demand is met at all times. In various embodiments, the degradation information is provided to the OEM and to maintenance personnel.

Referring now to FIG. 5 which illustrates additional details of the example process flow of FIG. 4. In various embodiments, the control block 112 has two major functions. The first function is to ensure that all the macroscopic parameters (e.g., Qn, Tn, Mn, In, and Vn) are aligned to the hydrogen H2 demand. In particular, at block 500, the hydrogen demand is assessed and the output current In for each electrolyzer En is estimated. A signal is sent to the rectifiers 210 and the required supply voltage Vn is provided to each electrolyzer En at block 502.

The second function is to perform an initial level check for stack degradation. In various embodiments, this initial level check is performed by checking the performance of each electrolyzer stack with reference or standard data (typically supplied by the OEM of the electrolyzer stack). Typically, the OEM supplies a standard I-V curve for each electrolyzer which indicates what the typical Vn should be for a particular In. From this I-V curve, a typical baseline voltage Vm can be estimated for a particular In. In various embodiments, the control block 112 will continuously compare the supply voltage Vn to the baseline voltage Vm. If the supply voltage Vn does not exceed the baseline voltage Vm, it is determined at block 506 that there is not degradation detected. If the supply voltage Vn exceeds the baseline voltage Vm, an overpotential is detected (due to increased stack resistance) at block 504.

In various embodiments, for cases where $Vn > Vm$, an alert for electrolyzer degradation would be generated. From electrochemical engineering point of view, if $Vn > Vm$, then this means that the electrolyzer stack has to apply more overpotential for a given In and hence, this means that some part of electrolyzer has started to degrade. Therefore, for cases in which $Vn > Vm$, the process moves to the model block 114.

In various embodiments, the model block 114 is based on a physics based steady-state model for an electrolyzer. In the model block 114, the embedded steady-state electrolyzer model will first be aligned to the specifications provided by the OEM by fitting the I-V curve generated by the model with the I-V curve provided by the OEM at block 508. Further, in cases where control block 112 finds that Vn > Vm, the model block 114 will receive the operational (also termed runtime) I-V curve from the control block 112. In various embodiments, the I-V curves of both operation and OEM would be compared at block 510, and model coefficients are reiterated at block 512. In various embodiments, from this comparison a degree of degradation and possible causes of degradation are identified at block 514.

In various embodiments, upon understanding that there is degradation, the model block 114 would provide feedback to the control block 112 that a specific electrolyzer has undergone degradation. In various embodiments, in response to this feedback, the control block 112 would ensure that the degraded electrolyzer is not operated with the supply voltage Vn > the baseline voltage Vm such that the output current In is reduced and no further degradation occurs. At the same time, the control block 112 will alter the electrolyzer operator about the condition and would suggest all the possible causes of degradation that may be present.

In various embodiments, the data block 116 will continuously monitor, at block 516, the operational data from the operation block 204, refine the data at blocks 518 and 520, such as by performing noise removal and forming clusters. In various embodiments, clusters of operational parameter data correspond to one or more times the electrolyzer operated with one or more operational parameters in an undesirable range. For example, if the OEM indicates that the electrolyzer should not be operated beyond 100°C, the cluster data would identify how many times the electrolyzer has gone beyond 100°C. From such cluster data, another possible list of degradation causes is identified at block 522 and reported to the electrolyzer operator.

In various embodiments, the comparison and validation block 118 compares the list of possible causes of degradation identified by the data block 116 and the list of possible causes of degradation identified by the model block 114. In various embodiments, the decision block 120 uses this comparison to identify degradation causes that are on both lists. In various embodiments, degradation causes that are common to both lists can be considered as validated causes of degradation. In various embodiments, the decision block 120 will provide the degradation causes to the user and the user would then be suggested to either connect with the OEM, at block 524, or perform a suggestive maintenance procedure, at block 526.

In various embodiments, this degradation trajectory is plotted. For example, the system may be linearly degrading or exponentially degrading. Plotting the degradation trajectory helps understand the remaining life of the electrolyzer. Plotting the degradation trajectory also helps understand how the electrolyzer should be operated (e.g., the startups and shutdown modes) so as to not to accelerate this degradation beyond what is necessary. In various embodiments, a machine learning algorithm is used to determine the degradation trajectory and correlate the trajectory into degradation causes.

For example, if the degradation is linearly correlated, that means the voltage and current relationship is linear. Then it can be determined that the degradation is related to a certain aspect of the electrolyzer, such as pure resistive contributions which would come from a membrane, or it would come from the conductivity measurement.

However, if the degradation is nonlinear and existing at lower ends of the current density, then that degradation could mean that there is another phenomena which is occurring which is not necessarily related to membrane but perhaps closer to how the electrode itself is behaving. If the rate at which this is changing is increasing, there may also be an accelerating factor which is contributing to the degradation (typically temperature).

This information can be viewed together with the number of starts and stops that the electrolyzer has made, which may show that one of the accelerants was also probably the way the electrolyzer was being shut down and restarted over and over again. This may indicate that the electrodes are degrading faster.

According to various embodiments, an example normal case workflow is provided. In this example, a 100 megawatt (MW) alkaline electrolyzer facility comprises ten electrolyzer stacks (E1 - E10) electrically connected in parallel. At any instance t, it is assumed that 100MW of power is received from one or more solar power sources, and of that 100 MW received, about 80 MW is distributed to the electrolyzer stacks. In various embodiments, the other 20 MW is provided to power other functions of the system, such as water management, purification, and compression. In various embodiments as described above, all the macroscopic parameters will be measured by the operation block and this data will be shared with the control block and the data block. In this example, the parameters are provided in following units: voltage (V) (volt); current (I) (amp) / power (MW); hydrogen generation rate (H) (kg/h); hydrogen purity (p) (%); electrolyte inlet temperature (T) (Deg C), electrolyte circulation rate (Q) (L/h); electrolyte molarity or conductivity (M) (Molar); and outlet product pressure (P) (bar).

In various embodiments, when the data reaches the control block, the control block will check whether the received data aligns with the OEM specified data and the data block will register/orchestrate data (for example, if the OEM specifies that electrolyzer should not be operated beyond 100°C, the cluster data would identify that how many times the electrolyzer has gone beyond or at 100°C.).

An example comparison can be seen in below Table 1:

Table 1

|  | E1 | E2 | E3 | E4 | E5 | E6 | E7 | E8 | E9 | E10 |
|---|---|---|---|---|---|---|---|---|---|---|
| Measured values | | | | | | | | | | |
| V | 313 | 315 | 320 | 310 | 328 | 329 | 310 | 324 | 313 | 311 |
| MW | 7.83 | 7.88 | 8.01 | 7.74 | 8.19 | 8.24 | 7.74 | 8.10 | 7.83 | 7.79 |
| H | 141.3 | 141.2 | 137 | 143.7 | 133.8 | 133 | 143.7 | 135.2 | 142.1 | 142.2 |
| p | 99.99 | 99.99 | 99.99 | 99.99 | 99.99 | 99.99 | 99.99 | 99.99 | 99.99 | 99.99 |
| Q | 81 | 80 | 81 | 82 | 80 | 81 | 81 | 81 | 80 | 80 |
| T | 1272 | 1271 | 1237 | 1293 | 1204 | 1197 | 1293 | 1217 | 1278 | 1279 |
| M | 5 | 5.1 | 5 | 4.9 | 5 | 4.7 | 5 | 5 | 5 | 5 |
| P | 30 | 30 | 30 | 30 | 30 | 30 | 30 | 30 | 30 | 30 |
| OEM Specified values | | | | | | | | | | |
| V | 313 | 315 | 320 | 310 | 328 | 329 | 310 | 324 | 313 | 311 |
| MW | 7.83 | 7.88 | 8.01 | 7.74 | 8.19 | 8.24 | 7.74 | 8.10 | 7.83 | 7.79 |
| H | 141.3 | 141.2 | 137 | 143.7 | 133.8 | 133 | 143.7 | 135.2 | 142.1 | 142.2 |
| p | 99.99 | 99.99 | 99.99 | 99.99 | 99.99 | 99.99 | 99.99 | 99.99 | 99.99 | 99.99 |
| Q | 81 | 80 | 81 | 82 | 80 | 81 | 81 | 81 | 80 | 80 |
| T | 1272 | 1271 | 1237 | 1293 | 1204 | 1197 | 1293 | 1217 | 1278 | 1279 |
| M | 5 | 5.1 | 5 | 4.9 | 5 | 4.7 | 5 | 5 | 5 | 5 |
| P | 30 | 30 | 30 | 30 | 30 | 30 | 30 | 30 | 30 | 30 |

In the above case, it is hypothetically shown that current data is exactly equal to the OEM data. In this case the control block will not take any decision and the normal operation will be continued.

According to various embodiments, an example abnormal case workflow is provided for the same example 100 megawatt (MW) alkaline electrolyzer facility. In this example it is assumed that the electrolyzer has been operated for 5000 hours.

As above, when the data reaches the control block, the control block will check whether the received data aligns with the OEM specified data and the data block will register/orchestrate data (for example, if the OEM specifies that electrolyzer should not be operated beyond 100°C, the cluster data would identify that how many times the electrolyzer has gone beyond or at 100°C.).

An example comparison can be seen in below Table 2:

Table 2

|  | E1 | E2 | E3 | E4 | E5 | E6 | E7 | E8 | E9 | E10 |
|---|---|---|---|---|---|---|---|---|---|---|
| Measured values | | | | | | | | | | |
| V | 313 | 315 | ***330*** | 310 | ***356*** | 329 | 310 | 324 | 313 | 311 |
| MW | 7.83 | 7.88 | 8.01 | 7.74 | 8.19 | 8.24 | 7.74 | 8.10 | 7.83 | 7.79 |
| H | 141.3 | 141.2 | 137 | 143.7 | 133.8 | 133 | 143.7 | 135.2 | 142.1 | 142.2 |
| p | 99.99 | 99.99 | 99.99 | 99.99 | 99.99 | 99.99 | 99.99 | 99.99 | 99.99 | 99.99 |
| Q | 81 | 80 | 81 | 82 | 80 | 81 | 81 | 81 | 80 | 80 |
| T | 1272 | 1271 | 1237 | 1293 | 1204 | 1197 | 1293 | 1217 | 1278 | 1279 |
| M | 5 | 5.1 | 5 | 4.9 | 5 | 4.7 | 5 | 5 | 5 | 5 |
| P | 30 | 30 | 30 | 30 | 30 | 30 | 30 | 30 | 30 | 30 |

(continued)

| OEM Specified values | | | | | | | | | | |
|---|---|---|---|---|---|---|---|---|---|---|
| V | 313 | 315 | 320 | 310 | 328 | 329 | 310 | 324 | 313 | 311 |
| MW | 7.83 | 7.88 | 8.01 | 7.74 | 8.19 | 8.24 | 7.74 | 8.10 | 7.83 | 7.79 |
| H | 141.3 | 141.2 | 137 | 143.7 | 133.8 | 133 | 143.7 | 135.2 | 142.1 | 142.2 |
| p | 99.99 | 99.99 | 99.99 | 99.99 | 99.99 | 99.99 | 99.99 | 99.99 | 99.99 | 99.99 |
| Q | 81 | 80 | 81 | 82 | 80 | 81 | 81 | 81 | 80 | 80 |
| T | 1272 | 1271 | 1237 | 1293 | 1204 | 1197 | 1293 | 1217 | 1278 | 1279 |
| M | 5 | 5.1 | 5 | 4.9 | 5 | 4.7 | 5 | 5 | 5 | 5 |
| P | 30 | 30 | 30 | 30 | 30 | 30 | 30 | 30 | 30 | 30 |

In this example, the voltage of E3 and E5 are greater than that of the OEM specified values. This is indicated by these values being bolded and underlined in Table 2. Now in this case, the control block will determine that there is some kind of degradation. In various embodiments, the control block will determine a degradation factor, such as by using this equation:

$$\text{Degradtion factor } (d_f) = \frac{(V_{inst})_I - (V_{BOL})_I}{(V_{EOL})_I - (V_{BOL})_I};$$

in which $V_{inst}$ is the instantaneous volage or the measured voltage, $V_{BOL}$ is the voltage at the beginning of life of the electrolyzer (i.e., when the electrolyzer is fresh), and $V_{EOL}$ is the end of life voltage. All these voltages are at a particular current. In this example, the degradation factors for E3 and E5 are calculated using the above equation as follows: E3 degradation factor = (330 - 320) / (360 -320) = 0.25; and E5 degradation factor = (356 -320) / (360 -320) = 0.90.

After this, the control block will now refer to the model block. In various embodiments, the model block will now generate an I-V curve for E3 and E5. Using the I-V curves, the model block will try to re-iterate the model coefficients and evaluate the possible cause of degradation. For example, in various embodiments the standard model equation in a perfect case would be:

$$V = aV_{eq} + bV_{act} + cV_{ohm} \quad;$$

In which $V_{eq}$ is the equilibrium voltage, $V_{act}$ is the activation voltage, and $V_{ohm}$ is the ohmic voltage.

In various embodiments, with the data coming from the control block, the model block will perform a regression analysis and reevaluate the coefficients a, b, and c. For example, a change in coefficient a indicates some irreversible change in the electrolyzer, a change in coefficient b indicates degradation in either the anode or the cathode, and a change in coefficient c indicates a resistance increase in the electrolyzer. In various embodiments, with this kind of analysis, the model block will provide information to the comparison block about the possible cause of degradation. In various embodiments, the data block will also observe all the orchestrated data and indicate the possible cause of degradation to the comparison block. In various embodiments, the comparison block will be observed by the operator and then the operator will be shown possible decisions that can be made. For example, one of the decisions that can be communicated to the control block is to operate E3 and E5 at lower power levels. Hence by this workflow, the degradation is monitored and handled.

In various embodiments, other data analyses of the macroscopic parameters can provide degradation information. For example, a full range I-V curve generation is a particularly easy way to assess macro degradation in electrolyzer stacks. For example, after hours of operation, a degraded stack will typically show a high voltage for a given current, which indicates that a higher voltage has to be applied to execute the same H2 production.

As another example, low range I-V curves are used to analyze the activation losses in the electrolyzer stack. Such activation losses typically indicate the electrode health in the electrolyzer stack. High activation losses indicate that the electrodes have observed some sort of degradation.

As another example, low frequency impedance can provide information about the entire resistance of the electrolyzer stack. Such an analysis can provide specific information about where the degradation is occurring, for example, in the electrode/membrane/electrolyte or the current collector.

In various embodiments, the rectifier in the electrolyzer facility can be fine-tuned so that a full range I-V curve can be generated after different operational times. The variation in the full range I-V curve over time can help identify different kind of losses in the system. For example, variation in the linear region can help identify changes in ohmic loss. Changes in ohmic loss indicate that either the membrane/separator or electrolyte has undergone some sort of degradation.

In various embodiments, the rectifier in the electrolyzer facility can be fine-tuned so that a low-current range I-V curve can be generated during instances when the renewable power available is low. Such This low-current range I-V curves provide information about the electrode health. A higher voltage on the low-current range I-V curve (for a given current) indicates that the resistance of the electrode has increased to generate the same amount of H2. Increased resistance indirectly indicates modification in the structural/microscopic characteristics of the electrode.

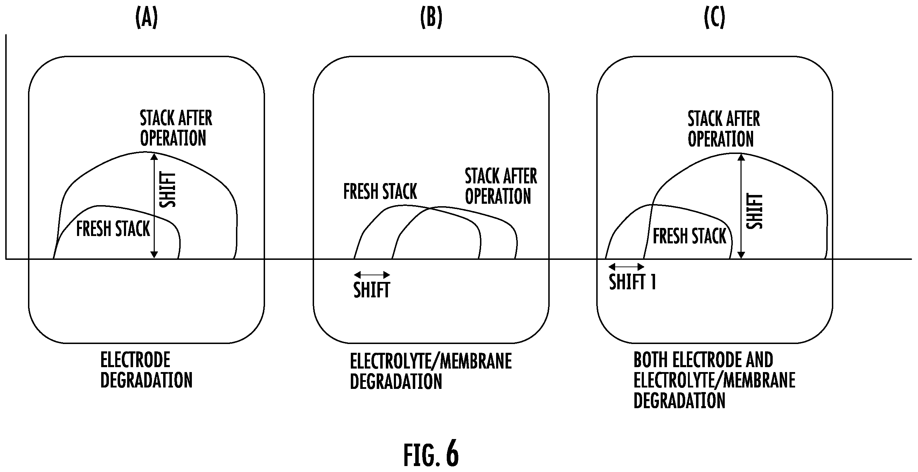

In various embodiments, impedance analysis typically refers to application of a variable frequency of current via finetuning of the ripple currents. Application of such variable frequency currents to an electrolyzer enable generation of an impedance analysis as illustrated in FIGS. 6A-C. In various embodiments, an impedance analysis can accurately indicate the source of degradation in an electrolyzer stack. For example, variation in the diameter of the response indicates that the charge transfer resistance has increased (this can be confirmed from low range I-V curves as well). This is seen in FIG. 6A. Moreover, variation in the onset of the curve indicates the degradation of the electrolyte/membrane (this can be confirmed from full range I-V curves as well). This is seen in FIG. 6B. FIG. 6C illustrates both a variation in the diameter of the response and a variation in the onset of the curve, thereby indicating both that the charge transfer resistance has increased and degradation of the electrolyte/membrane.

In various embodiments, the combination of I-V curves and impedance analysis can provide a good indication of degradation of an electrolyzer stack at any point in time, including an indication of which electrolyzer component(s) (e.g., electrode, membrane, electrolyte, etc.) is/are involved. Further, results from such an analysis can also be useful for an electrolyzer operator, such as by helping them identify whether an electrolyzer stack needs replacement or can be managed via some process modifications. This can help the operation take quick action and therefore help reduce downtime and ensure better productivity for their green hydrogen plant.

Embodiments of the present disclosure are described herein with reference to the accompanying drawings, in which some, but not all, embodiments of the disclosure are shown. Many modifications and other embodiments of the disclosure set forth herein will come to mind to one skilled in the art to which this disclosure pertains having the benefit of the teachings presented in the foregoing description and the associated drawings. Therefore, it is to be understood that the embodiments are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

Although an example processing system has been described above, implementations of the subject matter and the functional operations described herein can be implemented in other types of digital electronic circuitry, or in computer software, firmware, or hardware, including the structures disclosed in this specification and their structural equivalents, or in combinations of one or more of them.

Embodiments of the subject matter and the operations described herein can be implemented in digital electronic circuitry, or in computer software, firmware, or hardware, including the structures disclosed in this specification and their structural equivalents, or in combinations of one or more of them. Embodiments of the subject matter described herein can be implemented as one or more computer programs, i.e., one or more modules of computer program instructions, encoded on computer storage medium for execution by, or to control the operation of, information/data processing apparatus. Alternatively, or in addition, the program instructions can be encoded on an artificially generated propagated signal, e.g., a machine-generated electrical, optical, or electromagnetic signal, which is generated to encode information/data for transmission to suitable receiver apparatus for execution by an information/data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The operations described herein can be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described herein can be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described herein can be implemented on a computer having a display device, e.g., a CRT (cathode ray tube) or LCD (liquid crystal display) monitor, for displaying information/data to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described herein can be implemented in a computing system that includes a back-end component, e.g., as an information/data server, or that includes a middleware component, e.g., an application server, or that includes a front-end component, e.g., a client computer having a graphical user interface or a web browser through which a user can interact with an implementation of the subject matter described herein, or any combination of one or more such back-end, middleware, or front-end components. The components of the system can be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) can be received from the client device at the server.

While this specification contains many specific implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

## Claims

1.  A computer-implemented method for diagnosing a degradation condition in an electrolyzer, the method comprising:

    receiving data corresponding to a plurality of operational parameters of an electrolyzer stack, the plurality of operational parameters comprising at least an input voltage and an operational current;
    generating one or more runtime current-voltage (I-V) curves based on the input voltage and the operational current;
    comparing the one or more generated I-V curves to one or more expected I-V curves;
    identifying a first set of one or more degradation conditions based on one or more deviations between the one or more generated I-V curves and the one or more expected I-V curves;
    identifying one or more data clusters of operational parameter data corresponding to one or more times the electrolyzer operated with one or more operational parameters in an undesirable range;
    identifying a second set of one or more degradation conditions based on the one or more identified data clusters;
    comparing the first set of one or more degradation conditions and the second set of one or more degradation conditions to identify if one or more degradation conditions are present in both the first set of one or more degradation conditions and the second set of one or more degradation conditions; and
    if one or more degradation conditions are present in both the first set of one or more degradation conditions and the second set of one or more degradation conditions, reporting the one or more degradation conditions that are present in both the first set of one or more degradation conditions and the second set of one or more degradation conditions.

2.  The method of claim 1, wherein the plurality of operational parameters comprises process parameters and electrical parameters;

    wherein the process parameters comprise one or more of a feed rate of an electrolyte, a temperature of the electrolyte, a molarity of the electrolyte, a purity of the electrolyte, a pressure of the electrolyte, and an amount of hydrogen produced; and
    wherein the electrical parameters comprise the input voltage and the operational current.

3.  The method of claim 1, wherein the one or more degradation conditions comprise electrode corrosion, electrode fouling, membrane/separator failure, bipolar plate corrosion, and/or current collector dissolution.

4.  The method of claim 1, further comprising comparing the input voltage to a predetermined baseline voltage;
    wherein comparing the one or more generated I-V curves to one or more expected I-V curves, identifying a first set of one or more degradation conditions based on one or more deviations between the one or more generated I-V curves and the one or more expected I-V curves, and identifying one or more data clusters of operational parameter data corresponding to one or more times the electrolyzer operated with one or more operational parameters in an undesirable range are performed when the input voltage exceeds the predetermined baseline voltage.

5.  The method of claim 1, further comprising:
    if one or more degradation conditions are identified based on one or more deviations between the one or more generated I-V curves and the one or more expected I-V curves, providing feedback to a control mechanism of the electrolyzer to reduce the input voltage.

6. An apparatus for diagnosing a degradation condition in an electrolyzer, the apparatus comprising at least one processor and at least one non-transitory memory comprising program code, wherein the at least one non-transitory memory and the program code are configured to, with the at least one processor, cause the apparatus to at least:

receive data corresponding to a plurality of operational parameters of an electrolyzer stack, the plurality of operational parameters comprising at least an input voltage and an operational current;
generate one or more runtime current-voltage (I-V) curves based on the input voltage and the operational current;
compare the one or more generated I-V curves to one or more expected I-V curves;
identify a first set of one or more degradation conditions based on one or more deviations between the one or more generated I-V curves and the one or more expected I-V curves;
identify one or more data clusters of operational parameter data corresponding to one or more times the electrolyzer operated with one or more operational parameters in an undesirable range;
identify a second set of one or more degradation conditions based on the one or more identified data clusters;
compare the first set of one or more degradation conditions and the second set of one or more degradation conditions to identify if one or more degradation conditions are present in both the first set of one or more degradation conditions and the second set of one or more degradation conditions; and
if one or more degradation conditions are present in both the first set of one or more degradation conditions and the second set of one or more degradation conditions, report the one or more degradation conditions that are present in both the first set of one or more degradation conditions and the second set of one or more degradation conditions.

7. The apparatus of claim 6, wherein the plurality of operational parameters comprises process parameters and electrical parameters;

wherein the process parameters comprise one or more of a feed rate of an electrolyte, a temperature of the electrolyte, a molarity of the electrolyte, a purity of the electrolyte, a pressure of the electrolyte, and an amount of hydrogen produced; and
wherein the electrical parameters comprise the input voltage and the operational current.

8. The apparatus of claim 6, wherein the one or more degradation conditions comprise electrode corrosion, electrode fouling, membrane/separator failure, bipolar plate corrosion, and/or current collector dissolution.

9. The apparatus of claim 6, wherein the at least one non-transitory memory and the program code are further configured to, with the at least one processor, cause the apparatus to compare the input voltage to a predetermined baseline voltage; and
wherein comparing the one or more generated I-V curves to one or more expected I-V curves, identifying a first set of one or more degradation conditions based on one or more deviations between the one or more generated I-V curves and the one or more expected I-V curves, and identifying one or more data clusters of operational parameter data corresponding to one or more times the electrolyzer operated with one or more operational parameters in an undesirable range are performed when the input voltage exceeds the predetermined baseline voltage.

10. The apparatus of claim 6, wherein the at least one non-transitory memory and the program code are further configured to, with the at least one processor, cause the apparatus to, if one or more degradation conditions are identified based on one or more deviations between the one or more generated I-V curves and the one or more expected I-V curves, provide feedback to a control mechanism of the electrolyzer to reduce the input voltage.

11. A computer program product for diagnosing a degradation condition in an electrolyzer, the computer program product comprising at least one non-transitory computer-readable storage medium having computer-readable program code portions stored therein, the computer-readable program code portions comprising an executable portion configured to:

receive data corresponding to a plurality of operational parameters of an electrolyzer stack, the plurality of operational parameters comprising at least an input voltage and an operational current;
generate one or more runtime current-voltage (I-V) curves based on the input voltage and the operational current;
compare the one or more generated I-V curves to one or more expected I-V curves;
identify a first set of one or more degradation conditions based on one or more deviations between the one or more generated I-V curves and the one or more expected I-V curves;
identify one or more data clusters of operational parameter data corresponding to one or more times the electrolyzer operated with one or more operational parameters in an undesirable range;
identify a second set of one or more degradation conditions based on the one or more identified data clusters;
compare the first set of one or more degradation conditions and the second set of one or more degradation conditions to identify if one or more degradation conditions are present in both the first set of one or more degradation conditions and the second set of one or more degradation conditions; and
if one or more degradation conditions are present in both the first set of one or more degradation conditions and the second set of one or more degradation conditions, report the one or more degradation conditions that are present in both the first set of one or more degradation conditions and the second set of one or more degradation conditions.

12. The computer program product of claim 11, wherein the plurality of operational parameters comprises process parameters and electrical parameters;

   wherein the process parameters comprise one or more of a feed rate of an electrolyte, a temperature of the electrolyte, a molarity of the electrolyte, a purity of the electrolyte, a pressure of the electrolyte, and an amount of hydrogen produced; and
   wherein the electrical parameters comprise the input voltage and the operational current.

13. The computer program product of claim 11, wherein the one or more degradation conditions comprise electrode corrosion, electrode fouling, membrane/separator failure, bipolar plate corrosion, and/or current collector dissolution.

14. The computer program product of claim 11, wherein the computer-readable program code portions further comprise an executable portion configured to compare the input voltage to a predetermined baseline voltage; and
wherein comparing the one or more generated I-V curves to one or more expected I-V curves, identifying a first set of one or more degradation conditions based on one or more deviations between the one or more generated I-V curves and the one or more expected I-V curves, and identifying one or more data clusters of operational parameter data corresponding to one or more times the electrolyzer operated with one or more operational parameters in an undesirable range are performed when the input voltage exceeds the predetermined baseline voltage.

15. The computer program product of claim 11, wherein the computer-readable program code portions further comprise an executable portion configured to, if one or more degradation conditions are identified based on one or more deviations between the one or more generated I-V curves and the one or more expected I-V curves, provide feedback to a control mechanism of the electrolyzer to reduce the input voltage.

ELECTROLYZER MODULE(S) ——100

COMMUNICATIONS NETWORK ——104

CONTROL / MONITORING SYSTEM ——110

CONTROL BLOCK ——112

MODEL BLOCK ——114

DATA BLOCK ——116

COMPARISON AND VALIDATION BLOCK ——118

DECISION BLOCK ——120

FIG. 1

FIG. 2

**FIG. 3**

FEEDBACK TO RESPOND
TO DEGRADATION

MODEL BLOCK

114

118

120

COMPARISON &
VALIDATION

DECISION BLOCK

CONTROL BLOCK

112

RCA TO
DEGRADATION

DEGRADATION
INTIMATION

DATA BLOCK

116

OPERATIONAL DATA (PROCESS
AND ELECTRICAL PARAMETERS)

204

OPERATION BLOCK

FIG. 4

FEEDBACK TO UPDATE CHANGES

MODEL BLOCK

508 — MODEL GENERATES I-V CURVE (IN-LINE WITH OEM SPECIFICATIONS) → 510 — COMPARISON WITH RUN-TIME V-I CURVE → 512 — RE-ITERATION OF MODEL COEFFICIENTS → 514 — POSSIBLE DEGRADATION CAUSE — 114

GENERATE RUN-TIME I-V CURVE

CONTROL BLOCK

500 — ASSESSMENT OF $H_2$ DEMAND AND ESTIMATION OF $I_n$. | SIGNAL TO RECTIFIER | 502 — TO GET A DESIRED $I_n$, THE RECTIFIER APPLIES $V_n$

IF $V_n > V_m$ → 504 — OVERPOTENTIAL DETECTED (STACK RESISTANCE INCREASED) — 112

IF $V_n <= V_m$ → 506 — NO DEGRADATION

118 — COMPARISON & VALIDATION

DECISION BLOCK

120

524 — INTIMATION TO OEM

526 — INTIMATION FOR IN-HOUSE MAINTENANCE

DATA BLOCK

CONTINUOUS DATA MONITORING → NOISE REMOVAL AND CLUSTER FORMATION → CLUSTER OF ALL MEASURABLE PARAMETERS → POSSIBLE DEGRADATION CAUSES — 116

516    518    520    522

OPERATIONAL DATA (PROCESS AND ELECTRICAL PARAMETERS)

OPERATION BLOCK — 204

FIG. 5

EP 4 717 796 A2

FIG. 6